(19) Europäisches Patentamt
European Patent Office
Office européen des brevets

(11) **EP 2 801 150 B1**

(12) **FASCICULE DE BREVET EUROPEEN**

(45) Date de publication et mention
de la délivrance du brevet:
**11.10.2017 Bulletin 2017/41**

(21) Numéro de dépôt: **13700368.7**

(22) Date de dépôt: **04.01.2013**

(51) Int Cl.:
*H02M 7/493* (2007.01)  *H02P 27/08* (2006.01)
*B60L 11/18* (2006.01)

(86) Numéro de dépôt international:
**PCT/EP2013/050125**

(87) Numéro de publication internationale:
**WO 2013/102673 (11.07.2013 Gazette 2013/28)**

(54) **SYSTEME D'ALIMENTATION D'UNE CHARGE ALTERNATIVE PAR PLUSIEURS SOURCES DE TENSION CONTINUE**

SYSTEM ZUR BEREITSTELLUNG EINER WECHSELSTROMLAST AUS MEHREREN GLEICHSPANNUNGSQUELLEN

SYSTEM FOR SUPPLYING AN AC LOAD FROM A PLURALITY OF DC VOLTAGE SOURCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.01.2012 FR 1250161**

(43) Date de publication de la demande:
**12.11.2014 Bulletin 2014/46**

(73) Titulaire: **Commissariat à l'Énergie Atomique et aux Énergies Alternatives
75015 Paris (FR)**

(72) Inventeurs:
• **BUZON, Didier**
  **F-38000 Grenoble (FR)**
• **CHATROUX, Daniel**
  **F-38470 Teche (FR)**

(74) Mandataire: **GIE Innovation Competence Group
310, avenue Berthelot
69372 Lyon Cedex 08 (FR)**

(56) Documents cités:
**EP-A1- 0 088 338      EP-A2- 0 524 398
US-A1- 2011 133 677**

**Description**

L'invention concerne l'hybridation de sources de tension continue pour alimenter une charge alternative.

Les systèmes électriques incluant une source de tension continue de forte puissance connaissent un développement important. En effet, de nombreux systèmes de transport incluent une alimentation de tension continue.

Les véhicules hybrides combustion/électrique ou électriques incluent notamment des batteries de forte puissance. Pour obtenir le niveau de tension adéquat, on place en série plusieurs accumulateurs électrochimiques. Pour obtenir de fortes puissances et capacités, on place plusieurs groupes d'accumulateurs en série. Le nombre d'étages (nombre de groupes d'accumulateurs) et le nombre d'accumulateurs en parallèle dans chaque étage varient en fonction de la tension, du courant et de la capacité souhaités pour la batterie. L'association de plusieurs accumulateurs est appelée une batterie d'accumulateurs. Les accumulateurs électrochimiques utilisés pour de tels véhicules sont généralement du type lithium ion pour leur capacité à stocker une énergie importante avec un poids et un volume contenus. Les technologies de batterie de type Lithium ion phosphate de fer LiFePO4 font l'objet d'importants développements du fait d'un niveau de sécurité intrinsèque élevé, au détriment d'une densité de stockage d'énergie un peu en retrait.

De telles batteries sont utilisées pour entraîner un moteur électrique à courant alternatif par l'intermédiaire d'un onduleur. Les niveaux de tension nécessaires pour de tels moteurs atteignent plusieurs centaines de Volts, typiquement de l'ordre de 400 Volts. De telles batteries comportent également une forte capacité afin de favoriser l'autonomie du véhicule en mode électrique.

Les piles à combustible de forte puissance sont également envisagées comme sources de tension continue pour des véhicules automobiles particuliers ou pour des véhicules de transport en commun. Une pile à combustible est un dispositif électrochimique qui convertit de l'énergie chimique directement en énergie électrique. Du dihydrogène est utilisé comme carburant de la pile à combustible. Le dihydrogène est oxydé sur une électrode de la pile et du dioxygène de l'air est réduit sur une autre électrode de la pile. La réaction chimique produit de l'eau. Les avantages de la pile à combustible sont d'éviter des rejets de produits nocifs sur le lieu de génération d'électricité, le faible bruit et un rendement supérieur aux moteurs thermiques.

Une pile à combustible comprend un empilement en série de plusieurs cellules. Chaque cellule génère une tension de l'ordre de 1 Volt, et leur empilement permet de générer une tension d'alimentation d'un niveau plus élevé, par exemple de l'ordre d'une ou plusieurs centaines de volts.

Pour l'alimentation du moteur électrique à courant alternatif, il peut être souhaitable de disposer de plusieurs sources de tension continue distinctes. Des développements ont ainsi été effectués pour réaliser l'hybridation de différentes sources de tension continue. Le but d'une telle hybridation est de garantir la disponibilité fonctionnelle du système ou d'optimiser le système en exploitant les performances optimales respectives de chaque source de tension continue.

Dans un système à alimentation hybride, la batterie assure une autonomie au démarrage du système et permet de mettre en place une boucle de régulation de tension à réaction rapide. La pile à combustible garantit une autonomie importante pour un encombrement et un poids relativement réduits. L'une ou l'autre source de tension continue est utilisée soit alternativement comme source principale, ou comme source auxiliaire pour accroître par exemple l'autonomie du système.

Afin de disposer d'une grande souplesse de fonctionnement, il est usuel de réaliser une hybridation parallèle des différentes sources de tension continue. Ainsi, une des deux sources ou les deux simultanément peuvent alimenter le moteur électrique par l'intermédiaire de l'onduleur.

Les sources de tension de différents types présentent des niveaux de tension qui varient différemment en fonction des conditions d'utilisation. Par exemple, la tension délivrée par une batterie varie en fonction de son état de charge, de la température ambiante et du courant électrique débité. Pour une pile à combustible, la tension délivrée varie fortement en fonction du courant débité. Par conséquent, une hybridation parallèle suppose d'appliquer la tension de l'une des sources sur l'entrée d'un convertisseur continu/continu et de connecter la sortie du convertisseur en parallèle sur l'autre source de tension. La tension de sortie du convertisseur doit alors être régulée pour l'adapter à la tension de sortie de l'autre source de tension continue. L'une des sources de tension continue fonctionne en source de tension définissant le niveau de tension appliqué sur un bus. L'autre source de tension fonctionne en source de courant débitant le courant appelé par la charge sur le bus.

Du fait des variations fortement différentes des sources de tension, la plage de gain en tension du convertisseur est importante, ce qui induit un dimensionnement important de ses organes de commutation (par exemple des transistors de puissance), de certains composants électriques (condensateurs, inductances) et de refroidissement. Le dimensionnement est d'autant plus contraignant que le rapport cyclique d'utilisation de la source de tension connectée à l'entrée du convertisseur est éloigné de l'unité. Le rendement énergétique pour la source de tension connectée à l'entrée du convertisseur est par conséquent réduit, du fait des pertes induites par l'utilisation de ce convertisseur. Par ailleurs, le coût et l'encombrement d'un tel convertisseur peuvent s'avérer difficilement compatibles avec certaines applications, notamment des applications de transport.

Lorsqu'un convertisseur est nécessaire pour le couplage d'une batterie, celui-ci doit être bidirectionnel afin de pouvoir assurer la charge et la décharge de la batterie d'accumulateurs. Un tel convertisseur est coûteux pour les niveaux de puissance rencontrés.

Le document US7199535 décrit par ailleurs un système incluant un moteur électrique connecté en série entre les sorties de premier et deuxième onduleurs. Une première source de tension continue d'un premier type est connectée à l'entrée du premier onduleur. Une deuxième source de tension continue d'un second type est connectée à l'entrée du deuxième onduleur. L'accouplement des sources de tension est ainsi effectué sur un bus de tension alternative par l'intermédiaire des onduleurs. Les enroulements du moteur électrique sont connectés en série entre des interrupteurs respectifs des premier et deuxième onduleurs. Un contrôleur commande les commutations des interrupteurs des onduleurs. Au moyen d'une modulation de type PWM, le contrôleur définit la tension fournie par les premier et deuxième onduleurs.

Un tel système suppose un moteur électrique à enroulements libres, très spécifique et comportant six bornes d'alimentation avec un câblage très particulier. Les interrupteurs de puissance des deux onduleurs sont au nombre de 12, ce qui induit un coût non négligeable pour ses équipements. Les onduleurs doivent en outre être légèrement surdimensionnés pour permettre un transfert d'énergie de la première source de tension continue vers la deuxième source de tension continue. De même, le moteur électrique doit être surdimensionné pour être traversé par la somme d'un courant destiné à l'alimenter et un courant de charge d'une des deux sources de tension. Un tel moteur n'étant pas standardisé, son coût est particulièrement élevé. Un tel système peut être à l'origine de perturbations électromagnétiques relativement élevées du fait de sources électriques flottantes dans les onduleurs, nécessitant un filtrage particulier.

Le document US 2011/133677 décrit un système d'alimentation d'une charge alternative par plusieurs sources de tension continue. Ce système d'alimentation comprend :

- un premier onduleur à modulation de largeur d'impulsion comportant deux entrées destinées à être connectées à une première source de tension continue, deux interrupteurs connectés en série entre les deux bornes d'entrée du premier onduleur, une sortie connectée à un noeud de connexion entre lesdits interrupteurs du premier onduleur ;
- un deuxième onduleur à modulation de largeur d'impulsion comportant deux bornes d'entrée destinées à être connectées à une deuxième source de tension continue, des interrupteurs connectés en série entre les deux bornes d'entrée du deuxième onduleur, une sortie connectée à un noeud de connexion entre lesdits interrupteurs du deuxième onduleur, cette sortie étant au même potentiel que la sortie du premier onduleur ;

- un circuit de commande configuré pour commander les interrupteurs des premier et deuxième onduleurs en modulation de largeur d'impulsion, de sorte que les premier et deuxième onduleurs réalisent une alimentation alternée desdites sorties durant une même alternance de la tension alternative à générer sur lesdites sorties.

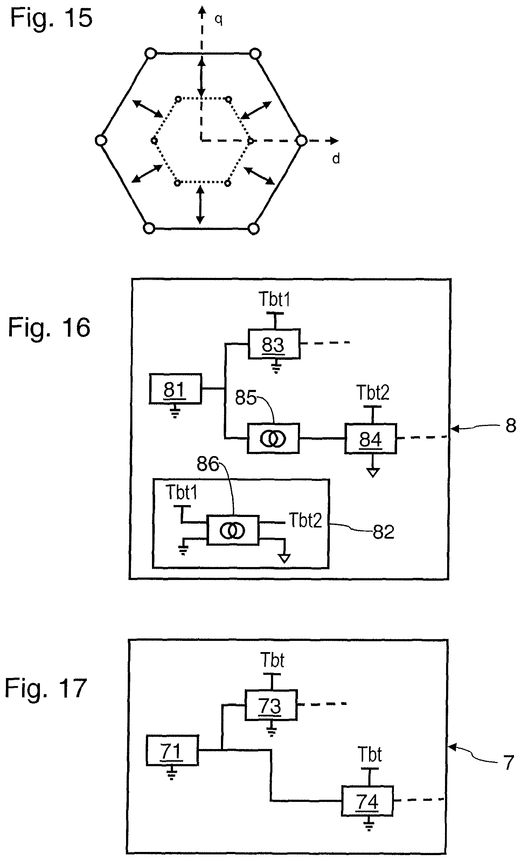

Un tel système d'alimentation nécessite un circuit de commande complexe, avec une isolation galvanique, et implique une gestion complexe des niveaux des tensions de pilotage des différents interrupteurs des onduleurs. Un exemple d'un tel circuit de commande est illustré à la figure 16. Le circuit de commande 8 comporte un système de contrôle commun 81 pour les onduleurs et des modules de commande 83 et 84 dédiés aux interrupteurs respectifs des onduleurs. Le système 81 fournit des signaux de commande aux modules 83 et 84. Le module 83 reçoit un premier potentiel de masse et un potentiel Tbt1 pour son alimentation et le pilotage de ses interrupteurs. Le module 84 reçoit un potentiel Tbt2 et un deuxième potentiel de masse pour son alimentation et le pilotage de ses interrupteurs. Le signal de commande est appliqué par le système 81 sur le module 84 par l'intermédiaire d'un transformateur d'isolation galvanique 85. Le circuit de commande 8 comprend en outre une alimentation 82 dédiée au module 84. L'alimentation 82 reçoit en entrée le premier potentiel de masse et le potentiel Tbt1. L'alimentation 82 inclut un transformateur d'isolation galvanique 86 pour appliquer en sortie le deuxième potentiel de masse et le potentiel Tbt2. Un tel système d'alimentation ne permet par ailleurs pas d'utiliser un unique contrôleur de défaut d'isolement sans une grande sensibilité aux fausses alertes.

L'invention vise à résoudre un ou plusieurs de ces inconvénients. L'invention porte ainsi sur un système d'alimentation d'une charge alternative par plusieurs sources de tension continue, comprenant :

- un premier onduleur à modulation de largeur d'impulsion comportant :

  - deux bornes d'entrée destinées à être connectées à une première source de tension continue ;
  - deux interrupteurs connectés en série entre les deux bornes d'entrée du premier onduleur ;
  - une sortie connectée à un noeud de connexion entre lesdits interrupteurs du premier onduleur ;

- un deuxième onduleur à modulation de largeur d'impulsion comportant :

  - deux bornes d'entrée destinées à être connectées à une deuxième source de tension continue, une borne d'entrée commune formant une desdites bornes d'entrée du deuxième onduleur et une desdites bornes d'entrée du premier onduleur ;

- des interrupteurs connectés en série entre les deux bornes d'entrée du deuxième onduleur ;
- une sortie connectée à un noeud de connexion entre lesdits interrupteurs du deuxième onduleur, cette sortie étant au même potentiel que la sortie du premier onduleur ;

- un circuit de commande configuré pour commander les interrupteurs des premier et deuxième onduleurs en modulation de largeur d'impulsion, de sorte que les premier et deuxième onduleurs réalisent une alimentation alternée desdites sorties durant une même alternance de la tension alternative à générer sur lesdites sorties ; un interrupteur commun formant un desdits interrupteurs connectés en série du premier onduleur et un desdits interrupteurs connectés en série du deuxième onduleur.

Selon une variante, la première source de tension continue inclut un convertisseur continu/continu et une source de tension connectée à l'entrée du convertisseur continu/continu, la sortie du convertisseur continu/continu étant connectée aux deux bornes d'entrée du premier onduleur.

Selon une autre variante, le système inclut en outre une première source de tension continue connectée aux deux bornes d'entrée du premier onduleur et une deuxième source de tension continue connectée aux deux bornes d'entrée du deuxième onduleur, la tension nominale de la première source de tension continue étant supérieure à la tension nominale de la deuxième source de tension continue.

Selon encore une autre variante, l'une desdites sources de tension continue est une pile à combustible et l'autre desdites sources de tension continue est une batterie d'accumulateurs électrochimiques.

Selon encore une variante, lesdits interrupteurs connectés en série du premier onduleur sont unidirectionnels en tension et bidirectionnels en courant.

Selon une autre variante, lesdits interrupteurs connectés en série du premier onduleur incluent chacun un transistor de puissance connecté en parallèle à une diode de roue libre.

Selon encore une autre variante, au moins un desdits interrupteurs connectés en série du deuxième onduleur est un interrupteur bidirectionnel en tension et unidirectionnel en courant.

Selon une variante, ledit interrupteur bidirectionnel en tension et unidirectionnel en courant inclut un transistor de puissance connecté en série avec une diode.

Selon encore une variante, au moins un desdits interrupteurs connectés en série du deuxième onduleur est un interrupteur bidirectionnel en tension et bidirectionnel en courant.

Selon encore une autre variante, ledit interrupteur bidirectionnel en tension et bidirectionnel en courant inclut deux transistors de puissance connectés tête-bêche en série, chacun de ces deux transistors comportant une diode de roue libre connectée en parallèle.

Selon une variante, lesdits premier et deuxième onduleurs sont des onduleurs triphasés comprenant chacun trois branches connectées en parallèle entre leurs bornes d'entrée, chaque branche incluant deux interrupteurs connectés en série et une sortie connectée à un noeud de connexion entre les deux interrupteurs de la branche, chacune desdites sorties du premier onduleur étant au même potentiel qu'une desdites sorties du deuxième onduleur.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique de principe d'une première variante d'un système d'alimentation selon l'invention ;
- la figure 2 est un diagramme illustrant d'une part un signal de commande à modulation de largeur d'impulsion sur un interrupteur dans un onduleur et d'autre part le signal harmonique de rang 1 (fondamental) résultant sur une charge alternative ;
- la figure 3 est un diagramme représentant un exemple de répartition des tensions respectives appliquées par deux onduleurs dans un système selon l'invention ;
- la figure 4 est une représentation schématique de principe d'une deuxième variante de système d'alimentation selon l'invention ;
- les figures 5 à 9 illustrent différents exemples de structures d'interrupteurs pouvant être intégrées dans des onduleurs d'un système d'alimentation selon l'invention ;
- la figure 10 est une représentation schématique d'un premier mode de réalisation d'un système selon la première variante ;
- la figure 11 est une représentation schématique d'un deuxième mode de réalisation d'un système selon la première variante ;
- la figure 12 est une représentation schématique d'un premier mode de réalisation d'un système selon la seconde variante ;
- la figure 13 est une représentation schématique d'un deuxième mode de réalisation d'un système selon la seconde variante ;
- la figure 14 est une représentation schématique d'un troisième mode de réalisation d'un système selon la première variante ;
- la figure 15 est un diagramme illustrant des modes de commande des onduleurs d'un système selon l'invention ;
- la figure 16 est un exemple de circuit de commande utilisé selon l'état de la technique ;
- la figure 17 est un exemple de circuit de commande pouvant être utilisé dans un système d'alimentation selon l'invention.

L'invention propose d'alimenter une charge alternative par l'intermédiaire de plusieurs sources de tension continue. Les sources de tension continue sont connectées à des entrées respectives de deux onduleurs. Ces onduleurs présentent une sortie de tension alternative commune. Des interrupteurs des premier et deuxième onduleurs sont commandés en modulation de largeur d'impulsion de façon à alimenter alternativement la sortie commune, durant une même alternance de la tension alternative à générer sur cette sortie. Les premier et deuxième onduleurs présentent une borne d'entrée commune pour les sources de tension continue.

L'invention permet d'utiliser un circuit de commande plus simple et sans nécessiter d'isolation galvanique. L'invention permet en outre de simplifier la gestion des niveaux des tensions de pilotage des différents interrupteurs des onduleurs. Un tel système d'alimentation permet en outre éventuellement d'utiliser un unique contrôleur de défaut d'isolement ayant une faible sensibilité aux fausses alertes.

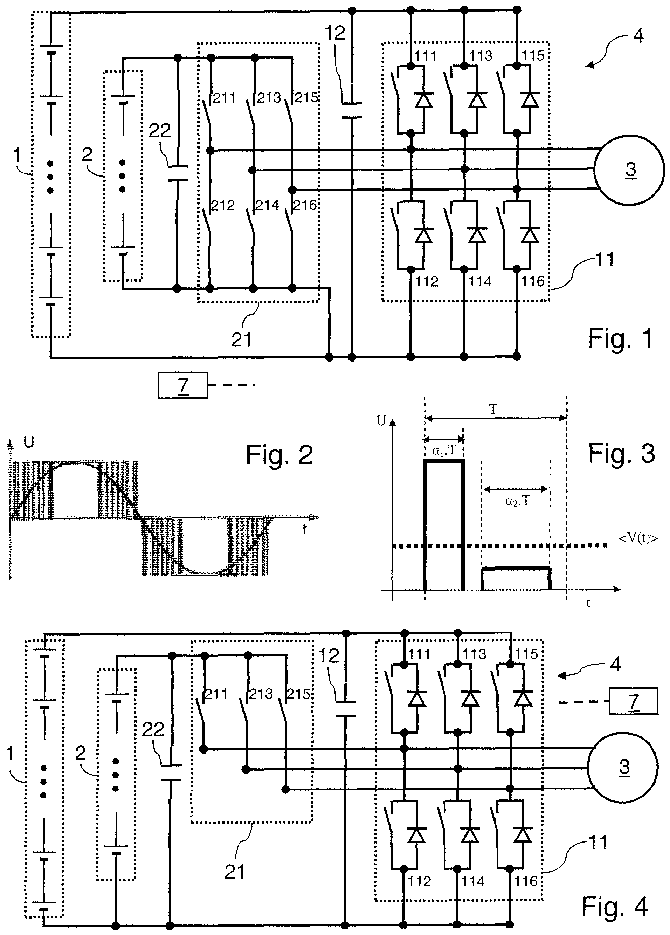

La figure 1 est une représentation schématique de principe d'une première variante d'un système d'alimentation 4 selon l'invention. Le système 4 inclut une première source de tension continue 1 et une deuxième source de tension continue 2. La première source de tension continue 1 est connectée à des bornes d'entrée d'un premier onduleur 11, formant son interface continu. La deuxième source de tension continue 2 est connectée à des bornes d'entrée d'un deuxième onduleur 21, formant son interface continu. Les onduleurs 11 et 21 comportent des sorties communes formant leur interface alternatif. Une charge électrique 3 est connectée à ces sorties communes. Le système d'alimentation 4 comprend en outre un circuit de commande 7.

Les sources de tension continue 1 et 2 présentent typiquement des tensions nominales distinctes et sont typiquement de nature différente. Les sources de tension continue peuvent par exemple être choisies en fonction des besoins parmi un groupe comprenant les batteries d'accumulateurs, les piles à combustible, les panneaux photovoltaïques, ou les convertisseurs alternatif/continu couplés à des moteurs électriques en génératrice. Ces sources de tension continue sont des sources de tension continue de puissance, typiquement aptes à délivrer une puissance supérieure à 1 kW, à des tensions supérieures à 100V.

La source de tension continue 1 n'est pas isolée de la source de tension continue 2. Les onduleurs 11 et 21 présentent ainsi une borne d'entrée commune. Le circuit de commande 7 peut être connecté à la borne commune pour présenter une structure simplifiée. L'utilisation d'une borne commune pour le circuit de commande 7 et les onduleurs 11 et 21 permet d'éviter des systèmes d'isolation galvanique et permet d'utiliser des circuits de pilotage des interrupteurs des onduleurs 11 et 21 de structure simple car nécessitant moins d'adaptation de niveaux de tension. Un exemple de circuit de commande 7 est illustré schématiquement à la figure 17. Le circuit de commande 7 comporte un système de contrôle commun 71 pour les onduleurs et des modules de commande 73 et 74 dédiés aux interrupteurs respectifs des onduleurs. Le système 71 fournit des signaux de commande aux modules 73 et 74. Les modules 83 et 84 reçoivent chacun un potentiel de masse et un potentiel Tbt pour leur alimentation et le pilotage de leurs interrupteurs.

Par ailleurs, une structure à borne commune pour les onduleurs 11 et 21 permet d'utiliser un unique contrôleur de défaut d'isolement insensible aux fausses alertes, en particulier pour des applications en régime IT (neutre isolé).

Les onduleurs 11 et 21 sont des onduleurs à modulation de largeur d'impulsion. Dans l'onduleur 11, pour chaque sortie, deux interrupteurs sont connectés en série entre les deux bornes d'entrée, une sortie étant connectée à un noeud de connexion entre ces deux interrupteurs. Dans l'onduleur 21, pour chaque sortie, deux interrupteurs sont connectés en série entre les deux bornes d'entrée, une sortie étant connectée à un noeud de connexion entre ces deux interrupteurs. Les onduleurs 11 et 21 peuvent être réalisés sous la forme de composants discrets. L'utilisation de composants discrets pour les onduleurs 11 et 21 permet avantageusement de rapprocher au plus près les interrupteurs de chaque onduleur de sa capacité d'entrée afin de limiter les inductances. Le circuit de commande 7 est configuré pour commander les commutations des interrupteurs des premier et deuxième onduleurs 11 et 21. Ces interrupteurs sont commandés en modulation de largeur d'impulsion. Selon l'invention, lors de la génération d'une même alternance de tension alternative par le système 4, les interrupteurs des deux onduleurs 11 et 21 sont modulés en largeur d'impulsion de façon à ce que ces onduleurs 11 et 21 alimentent alternativement la charge 3 connectée à leur sortie.

Pour chaque sortie de l'onduleur 11, les deux interrupteurs connectés en série et associés à cette sortie sont dédiés à cet onduleur 11. De même, pour chaque sortie de l'onduleur 21, les deux interrupteurs connectés en série et associés à cette sortie sont dédiés à cet onduleur 21. L'onduleur 11 comporte avantageusement un condensateur 12 connecté entre ses bornes d'entrée. L'onduleur 21 comporte avantageusement un condensateur 22 connecté entre ses bornes d'entrée. Les condensateurs 12 et 22 permettent de filtrer les ondulations de courant au sein des sources de tension continue 1 et 2.

La charge alternative 3 alimentée par le système 4 est ici un moteur électrique triphasé. Le moteur 3 peut par exemple être un moteur électrique de type synchrone ou asynchrone. Par conséquent, les onduleurs 11 et 21 sont également des onduleurs triphasés. Par conséquent, l'onduleur 11 comporte trois sorties et l'onduleur 21 comporte également trois sorties. Chaque sortie de l'onduleur 11 ou 21 correspond ainsi à une phase respective de la charge 3. Chaque sortie de l'onduleur

9      **EP 2 801 150 B1**      10

11 est commune avec une sortie de l'onduleur 21 et présente ainsi une même tension.

L'onduleur 11 comporte trois branches connectées en parallèle entre ses bornes d'entrée. Une première branche inclut des interrupteurs 111 et 112 connectés en série. Un noeud de connexion entre les interrupteurs 111 et 112 forme une première sortie d'alimentation de la charge 3. Une deuxième branche inclut des interrupteurs 113 et 114 connectés en série. Un noeud de connexion entre les interrupteurs 113 et 114 forme une deuxième sortie d'alimentation de la charge 3. Une troisième branche inclut des interrupteurs 115 et 116 connectés en série. Un noeud de connexion entre les interrupteurs 115 et 116 forme une troisième sortie d'alimentation de la charge 3.

L'onduleur 21 comporte trois branches connectées en parallèle entre ses bornes d'entrée. Une première branche inclut des interrupteurs 211 et 212 connectés en série. Un noeud de connexion entre les interrupteurs 211 et 212 forme une première sortie d'alimentation de la charge 3. Une deuxième branche inclut des interrupteurs 213 et 214 connectés en série. Un noeud de connexion entre les interrupteurs 213 et 214 forme une deuxième sortie d'alimentation de la charge 3. Une troisième branche inclut des interrupteurs 215 et 216 connectés en série. Un noeud de connexion entre les interrupteurs 215 et 216 forme une troisième sortie d'alimentation de la charge 3.

Pour réaliser le lissage de la tension alternative sinusoïdale à appliquer aux bornes du moteur 3, on utilise avantageusement l'inductance interne de ce type de moteur. On peut ainsi se dispenser d'inclure une inductance dans le système d'alimentation 4 ou d'en limiter le dimensionnement, ce qui permet de réduire sensiblement son coût et son encombrement.

La figure 2 est un diagramme illustrant d'une part un signal de commande à modulation de largeur d'impulsion sur un interrupteur dans un onduleur usuel à modulation de largeur d'impulsion et d'autre part le signal harmonique de rang 1 (fondamental) résultant sur une charge alternative.

De manière à synthétiser une onde de tension sinusoïdale telle qu'illustrée, un tel onduleur de tension hache à haute fréquence la tension U délivrée par sa source de tension continue. Sur chaque période haute fréquence T, la source continue est connectée entre deux phases du moteur électrique 3 pendant une durée $\alpha * T$. Sur la période T, la moyenne de la tension appliquée au moteur $\alpha * U$ correspond à la valeur $<v(t)>$ valeur moyenne sur la période T de la tension sinusoïdale $v(t)$ basse fréquence que l'on souhaite appliquer au moteur. Ainsi, $<v(t)> = \alpha * U$. Les inductances internes des moteurs électriques suffisent en général pour filtrer les composantes hautes fréquences du signal haché.

Selon l'invention, on alimente le moteur électrique 3 alternativement par l'onduleur 11 et par l'onduleur 21. Pour chaque phase, on entrelace alors la commande de ces onduleurs 11 et 21 de sorte que sur une période T haute fréquence, on réalise une modulation de largeur d'impulsion à partir de la tension U1 de l'onduleur 11 et à partir de la tension U2 de l'onduleur 21.

On obtient ainsi la tension moyenne $<v(t)>$ suivante :

$$<v(t)> = \alpha1 * U1 + \alpha2 * U2$$

$\alpha1$ et $\alpha2$ étant les rapports cycliques respectifs des onduleurs 11 et 12.

Dans l'exemple, avec U1 = 3 * $<v(t)>$ et U2 = $<v(t)>/2$, les rapports cycliques $\alpha1$ et $\alpha2$ à définir pour obtenir la tension moyenne $<v(t)>$ peuvent être par exemple respectivement de 0,25 et 0,5. Pendant le reste du cycle, on se trouve dans une phase de roue libre sans application de tension d'alimentation aux bornes du moteur 3.

Les deux sources de tension continue 1 et 2 sont utilisées pour alimenter alternativement la charge 3. En cours d'alimentation de la charge 3, on évitera avantageusement de connecter directement les sources de tension continue 1 et 2. Ainsi, lorsque des interrupteurs d'un onduleur seront fermés, les interrupteurs de l'autre onduleur seront ouverts.

Dans l'exemple illustré, la source de tension continue 1 présente une tension nominale supérieure à celle de la source de tension continue 2. La plage de tension de la source de tension continue 1 est par exemple supérieure à la plage de tension de la source de tension continue 2. L'onduleur 11 comporte des interrupteurs de type conventionnel, ceux-ci étant bidirectionnels en courant et unidirectionnels en tension. Ces interrupteurs sont considérés comme bidirectionnels en courant puisqu'ils peuvent être traversés par du courant suivant les deux sens. Ces interrupteurs sont considérés comme unidirectionnels en tension car conçus pour résister à une tension nominale seulement dans un sens. De tels interrupteurs sont ainsi relativement peu coûteux, Des interrupteurs bidirectionnels en tension ne sont pas nécessaires du fait de la polarité de la tension systématiquement identique appliquée par la source de tension 1.

Du fait de la tension nominale moindre fournie par la source de tension continue 2, les interrupteurs de l'onduleur 21 sont bidirectionnels en tension afin de résister à des tensions directes et inverses appliquées par l'onduleur 11.

Si la source de tension continue 2 est une pile à combustible, des interrupteurs unidirectionnels en courant peuvent être utilisés dans l'onduleur 21.

Si la source de tension continue 2 est une batterie d'accumulateurs, des interrupteurs bidirectionnels en courant doivent être utilisés dans l'onduleur 21 afin de mettre en oeuvre une recharge de cette batterie, par exemple à partir de la source de tension continue 1 ou du moteur électrique 3 fonctionnant en génératrice.

La figure 4 illustre schématiquement une

6

deuxième variante de système d'alimentation 4 selon l'invention. Le système 4 inclut une première source de tension continue 1 connectée à des bornes d'entrée d'un premier onduleur 11 à modulation de largeur d'impulsion. Le système 4 inclut une deuxième source de tension continue 2 connectée à des bornes d'entrée d'un deuxième onduleur 21 à modulation de largeur d'impulsion. Les sources de tension continue 1 et 2 présentent typiquement des tensions nominales distinctes et sont typiquement de nature différentes. Les onduleurs 11 et 21 comportent trois sorties distinctes, communes à ces onduleurs 11 et 21 et formant leur interface alternatif. Un moteur électrique triphasé 3 est connecté à ces sorties communes. Le système d'alimentation 4 comprend en outre un circuit de commande 7.

Comme dans la variante de la figure 1, la source de tension continue 1 n'est pas isolée de la source de tension continue 2. Dans cette variante, les onduleurs 11 et 21 présentent une borne d'entrée commune.

Afin de simplifier la structure du système 4, réduire sa consommation liée à des commutations, réduire son poids, réduire son volume et réduire la complexité de sa commande, les onduleurs 11 et 21 partagent les interrupteurs 112, 114 et 116. Ainsi, seuls les interrupteurs 111, 113 et 115 sont dédiés à l'onduleur 11, et seuls les interrupteurs 211, 213 et 215 sont dédiés à l'onduleur 21. L'interrupteur 112 est ainsi connecté en série avec l'interrupteur 111 d'une part et avec l'interrupteur 211 d'autre part. L'interrupteur 114 est ainsi connecté en série avec l'interrupteur 113 d'une part et avec l'interrupteur 213 d'autre part. L'interrupteur 116 est ainsi connecté en série avec l'interrupteur 115 d'une part et avec l'interrupteur 215 d'autre part. Les onduleurs 11 et 21 illustrés comportent ainsi seulement 9 interrupteurs de puissance pour générer une tension alternative aux bornes du moteur électrique 3. L'utilisation d'interrupteurs partagés par les onduleurs 11 et 21 s'avère particulièrement avantageuse dans les cas suivants :

- si les onduleurs 11 et 21 sont réalisés à partir d'un même circuit intégré ;
- si chaque phase fait appel à un dispositif à triples transistors intégrés.

Les transistors 111, 211 et 112 pour la première phase peuvent par exemple être intégré dans un tel dispositif (de même pour les transistors 113, 213 et 114 pour la deuxième phase et les transistors 115, 215 et 116 pour la troisième phase).

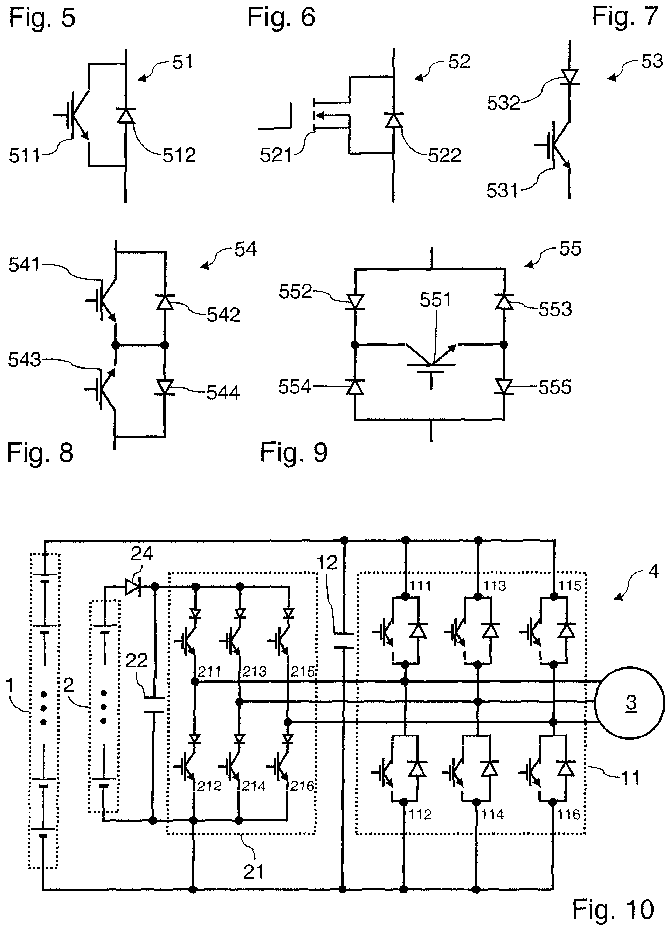

Les figures 5 à 9 illustrent différents exemples de structures d'interrupteurs utilisables dans un système 4 selon l'invention.

Les interrupteurs 51 et 52 des figures 5 et 6 sont des interrupteurs unidirectionnels en tension et bidirectionnels en courant.

L'interrupteur 51 comprend un transistor bipolaire à grille isolée (ou IGBT) 511 connecté en parallèle avec une diode 512.

L'interrupteur 52 comprend un transistor nMOS 521 connecté en parallèle avec une diode 522.

L'interrupteur 53 de la figure 7 est bidirectionnel en tension et unidirectionnel en courant. L'interrupteur 53 comprend un transistor bipolaire à grille isolée (ou IGBT) 531 connecté en série avec une diode 512.

Les interrupteurs 54 et 55 des figures 8 et 9 sont des interrupteurs bidirectionnels en tension et bidirectionnels en courant.

L'interrupteur 54 comprend des transistors IGBT 541 et 543 montés tête bêche. Le transistor 541 comporte une diode 542 connectée en parallèle. Le transistor 543 comporte une diode 544 connectée en parallèle.

L'interrupteur 55 comporte un transistor IGBT 551 connecté entre un premier noeud de connexion et un deuxième noeud de connexion. Des diodes 552 et 554 sont connectées tête-bêche en série, le premier noeud de connexion étant connecté aux cathodes de ces diodes. Des diodes 553 et 555 sont connectées tête-bêche en série, le deuxième noeud de connexion étant connecté aux anodes de ces diodes. L'anode de la diode 552 et la cathode de la diode 553 sont connectées à une première borne de l'interrupteur 55. L'anode de la diode 554 et la cathode de la diode 555 sont connectées à une deuxième borne de l'interrupteur 55.

Les interrupteurs 51 à 55 des figures 5 à 9 mettent en oeuvre des transistors de puissance. De tels transistors, réalisés à partir de composants semi-conducteurs, peuvent être réalisés à un coût réduit et permettent d'obtenir des vitesses de commutation élevées.

La figure 10 est un premier mode de réalisation d'un système 4 selon la première variante. Dans ce mode de réalisation, la source de tension continue 1 est une batterie d'accumulateurs et la source de tension continue 2 est une pile à combustible. La tension aux bornes de la batterie d'accumulateurs 1 reste systématiquement supérieure à la tension aux bornes de la pile à combustible 2. Les interrupteurs 111 à 116 du premier onduleur 11 sont unidirectionnels en tension et bidirectionnels en courant. Les interrupteurs 111 à 116 de l'exemple correspondent aux interrupteurs 51 de la figure 5. Les interrupteurs 211 à 216 du deuxième onduleur 21 sont bidirectionnels en tension et unidirectionnels en courant. Les interrupteurs 211 à 216 de l'exemple correspondent aux interrupteurs 53 de la figure 7. Le deuxième onduleur 21 comporte avantageusement une diode 24 (dont l'anode est connectée à la bonne positive de la pile à combustible 2) interposée entre les interrupteurs 211 à 216 et la pile à combustible 2. La diode 24 permet d'éviter tout retour de courant à l'intérieur de la pile à combustible 2.

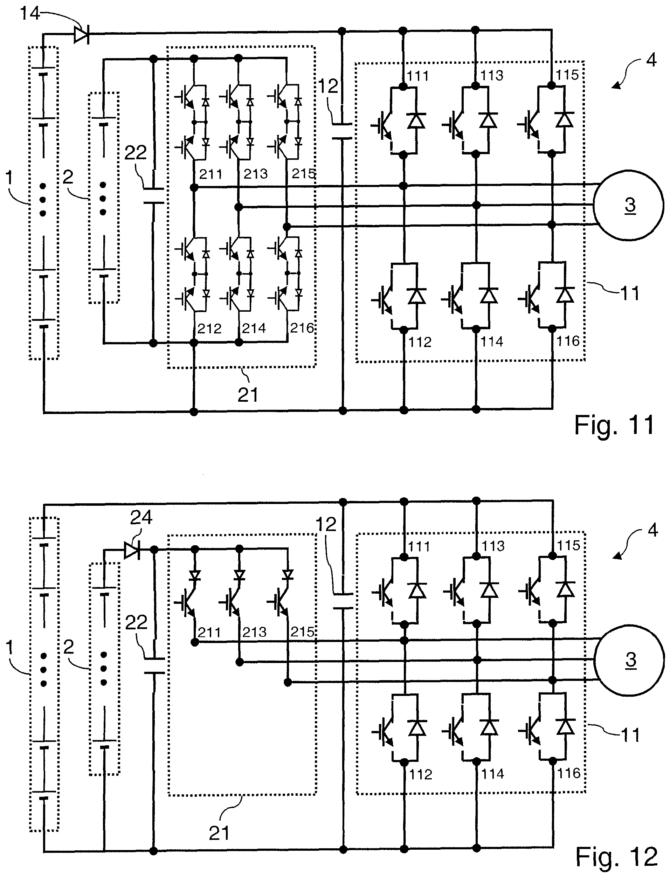

La figure 11 est un deuxième mode de réalisation d'un système 4 selon la première variante. Dans ce mode de réalisation, la source de tension continue 1 est une pile à combustible et la source de tension continue 2 est une batterie d'accumulateurs. La tension aux bornes de la batterie d'accumulateurs 1 reste systématiquement inférieure à la tension aux bornes de la pile à combustible 2 (au moins durant le fonctionnement de cette dernière). Les interrupteurs 111 à 116 du premier onduleur 11 sont unidirectionnels en tension et bidirectionnels en courant. Les interrupteurs 111 à 116 de l'exemple correspondent aux interrupteurs 51 de la figure 5. Les interrupteurs 211 à 216 du deuxième onduleur 21 sont bidirectionnels en tension et bidirectionnels en courant. Les interrupteurs 211 à 216 de l'exemple correspondent aux interrupteurs 54 de la figure 8.

La figure 12 est un premier mode de réalisation d'un système 4 selon la deuxième variante. Dans ce mode de réalisation, la source de tension continue 1 est une batterie d'accumulateurs et la source de tension continue 2 est une pile à combustible. La tension aux bornes de la batterie d'accumulateurs 1 reste systématiquement supérieure à la tension aux bornes de la pile à combustible 2. Les interrupteurs 111 à 116 du premier onduleur 11 sont unidirectionnels en tension et bidirectionnels en courant. Les interrupteurs 111 à 116 de l'exemple correspondent aux interrupteurs 51 de la figure 5. Les interrupteurs 211, 213 et 215 du deuxième onduleur 21 sont bidirectionnels en tension et unidirectionnels en courant. Les interrupteurs 211 à 216 de l'exemple correspondent aux interrupteurs 53 de la figure 7. Le deuxième onduleur 21 comporte avantageusement une diode 24 interposée entre les interrupteurs 211, 213, 215 et la pile à combustible 2.

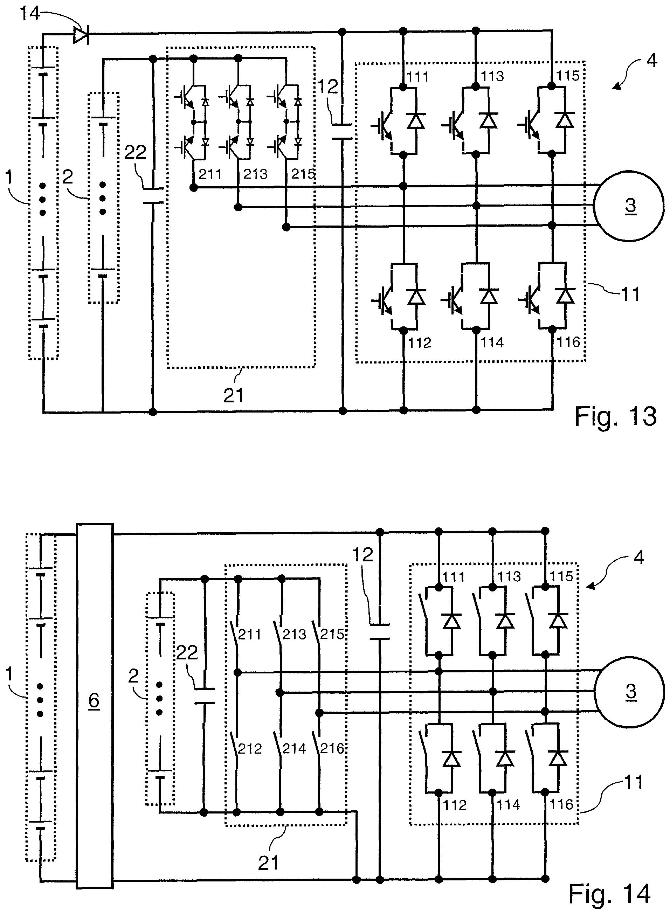

La figure 13 est un deuxième mode de réalisation d'un système 4 selon la deuxième variante. Dans ce mode de réalisation, la source de tension continue 1 est une pile à combustible et la source de tension continue 2 est une batterie d'accumulateurs. La tension aux bornes de la batterie d'accumulateurs 1 reste systématiquement inférieure à la tension aux bornes de la pile à combustible 2 (au moins durant le fonctionnement de cette dernière). Les interrupteurs 111 à 116 du premier onduleur 11 sont unidirectionnels en tension et bidirectionnels en courant. Les interrupteurs 111 à 116 de l'exemple correspondent aux interrupteurs 51 de la figure 5. Les interrupteurs 211, 213 et 215 du deuxième onduleur 21 sont bidirectionnels en tension et bidirectionnels en courant. Les interrupteurs 211, 213 et 215 de l'exemple correspondent aux interrupteurs 54 de la figure 8.

La figure 14 est un troisième mode de réalisation d'un système 4 selon la première variante. Dans ce mode de réalisation, la source de tension continue 1 inclut un convertisseur continu/continu 6 interposé entre une source de tension continue et l'entrée du premier onduleur 11. Le convertisseur 6 est un convertisseur abaisseur de tension dans un mode de fonctionnement où la source de tension continue 1 alimente la charge 3. L'utilisation du convertisseur 6 abaisseur de tension permet d'appliquer une tension moindre aux bornes de l'onduleur 11, et ainsi d'utiliser un onduleur 11 présentant un dimensionnement moindre de ses composants.

Un mode de fonctionnement avantageux, en particulier lorsque le système 4 est embarqué dans un véhicule, est d'utiliser la source de tension continue 1 comme source principale d'alimentation et d'utiliser la source de tension continue 2 comme source auxiliaire pour accroître l'autonomie du véhicule. La source de tension continue 1 est par exemple une batterie d'accumulateurs tandis que la source 2 est typiquement une pile à combustible.

On va décrire un exemple de dimensionnement du système 4, dans le cas du premier mode de réalisation de la deuxième variante. Dans un tel mode de fonctionnement, la source de tension continue 1 doit fournir une tension suffisante pour pouvoir alimenter seule un moteur de traction constituant la charge 3. Un véhicule automobile usuel ayant une puissance nominale Pmax a une puissance moyenne consommée nettement moindre. On prendra en l'occurrence comme hypothèse que la puissance moyenne consommée est proche de Pmax/3. On prévoit que la pile à combustible 2 fournisse une puissance de Pmax/3 lors d'un pic d'appel de puissance du véhicule. Pour un pic de puissance Pmax, la batterie 1 doit fournir une puissance de 2*Pmax/3.

Avec U la tension maximale délivrée par la pile à combustible 2 à son point nominal en la connectant comme source de tension continue dans un système selon le document US7199535, pour une tension moyenne donnée lue dans le diagramme dq de la figure 15, la valeur moyenne de la somme des tensions délivrées par l'onduleur 11 et l'onduleur 21 du système 4 doit atteindre 3* U. A la figure 15, le diagramme vectoriel en pointillé correspond à l'onduleur 21 associé à la pile à combustible 2 fonctionnant à pleine puissance, et le diagramme vectoriel en trait plein correspond à l'onduleur 11 et à l'onduleur 21 associé à la pile à combustible 2 fonctionnant à vide.

La tension de la batterie 1 doit alors atteindre 3,5 * U. La tension de la pile à combustible 2 doit alors atteindre 3,5 * U à vide et 1,75 * U à puissance maximale (en partant de l'hypothèse que la tension de la pile à combustible à vide est double de sa tension à pleine charge).

En pratique, de manière instantanée, le courant alimentant le moteur 3 traverse soit deux transistors IGBT (dans l'onduleur 11), soit deux transistors IGBT et une diode (dans l'onduleur 21), soit un transistor IGBT et une diode de roue libre. En moyenne, les interrupteurs des onduleurs selon l'invention sont donc moins sollicités que les interrupteurs de la solution décrite dans le document US7199535 (le courant y traverse systématiquement deux transistors IGBT et deux diodes).

Par ailleurs, lorsque seule l'une des sources de tension continue est utilisée la majeure partie du temps, une tension supérieure est disponible pour une même puissance, avec une moindre vitesse de commutation des interrupteurs selon l'invention, et par conséquent de moindre perte par commutation pour le système.

Les modes de réalisation détaillés précédemment portent sur l'hybridation d'une pile à combustible avec une batterie d'accumulateurs. Ces sources de tension continue peuvent être remplacées par d'autres sources de tension continue, comme un moteur thermique associé à une génératrice et un redresseur, ou comme un super-condensateur.

Bien que l'invention ait été décrite dans le cas particulier d'une charge triphasée, l'invention s'applique également à des systèmes d'alimentation pour d'autres types de charges polyphasées, ou pour des systèmes d'alimentation pour une charge monophasée.

**Revendications**

1. Système d'alimentation (4) d'une charge alternative (3) par plusieurs sources de tension continue (1,2), comprenant :

   - un premier onduleur (11) à modulation de largeur d'impulsion comportant :

     - deux bornes d'entrée destinées à être connectées à une première source de tension continue ;
     - deux interrupteurs connectés en série (111,112) entre les deux bornes d'entrée du premier onduleur ;
     - une sortie connectée à un noeud de connexion entre lesdits interrupteurs du premier onduleur ;

   - un deuxième onduleur (21) à modulation de largeur d'impulsion comportant :

     - deux bornes d'entrée destinées à être connectées à une deuxième source de tension continue,;
     - des interrupteurs connectés en série (211,212) entre les deux bornes d'entrée du deuxième onduleur ;
     - une sortie connectée à un noeud de connexion entre lesdits interrupteurs du deuxième onduleur, cette sortie étant au même potentiel que la sortie du premier onduleur ;

   - un circuit de commande (7) configuré pour commander les interrupteurs des premier et deuxième onduleurs (11,12) en modulation de largeur d'impulsion, de sorte que les premier et deuxième onduleurs réalisent une alimentation alternée desdites sorties durant une même alternance de la tension alternative à générer sur lesdites sorties ; le système d'alimentation étant **caractérisé par**
   - une borne d'entrée commune formant une desdites bornes d'entrée du deuxième onduleur et une desdites bornes d'entrée du premier onduleur et par

     - un interrupteur commun (112) formant un desdits interrupteurs connectés en série du premier onduleur et un desdits interrupteurs connectés en série du deuxième onduleur.

2. Système d'alimentation selon la revendication 1, dans lequel la première source de tension continue inclut un convertisseur continu/continu et une source de tension connectée à l'entrée du convertisseur continu/continu, la sortie du convertisseur continu/continu étant connectée aux deux bornes d'entrée du premier onduleur.

3. Système d'alimentation selon la revendication 1, incluant en outre une première source de tension continue connectée aux deux bornes d'entrée du premier onduleur et une deuxième source de tension continue connectée aux deux bornes d'entrée du deuxième onduleur, la tension nominale de la première source de tension continue étant supérieure à la tension nominale de la deuxième source de tension continue.

4. Système d'alimentation selon la revendication 3, dans lequel l'une desdites sources de tension continue est une pile à combustible et dans lequel l'autre desdites sources de tension continue est une batterie d'accumulateurs électrochimiques.

5. Système d'alimentation selon l'une quelconque des revendications précédentes, dans lequel lesdits interrupteurs connectés en série du premier onduleur sont unidirectionnels en tension et bidirectionnels en courant.

6. Système d'alimentation selon la revendication 5, dans lequel lesdits interrupteurs connectés en série du premier onduleur incluent chacun un transistor de puissance connecté en parallèle à une diode de roue libre.

7. Système d'alimentation selon la revendication 5 ou 6, dans lequel au moins un desdits interrupteurs connectés en série du deuxième onduleur est un interrupteur bidirectionnel en tension et unidirectionnel en courant.

8. Système d'alimentation selon la revendication 7, dans lequel ledit interrupteur bidirectionnel en tension et unidirectionnel en courant inclut un transistor de puissance connecté en série avec une diode.

9. Système d'alimentation selon la revendication 5 ou 6, dans lequel au moins un desdits interrupteurs connectés en série du deuxième onduleur est un interrupteur bidirectionnel en tension et bidirectionnel en courant.

10. Système d'alimentation selon la revendication 9, dans lequel ledit interrupteur bidirectionnel en tension et bidirectionnel en courant inclut deux transistors de puissance connectés tête-bêche en série, chacun de ces deux transistors comportant une diode de roue libre connectée en parallèle.

11. Système d'alimentation selon l'une quelconque des revendications précédentes, dans lequel lesdits premier et deuxième onduleurs sont des onduleurs triphasés comprenant chacun trois branches connectées en parallèle entre leurs bornes d'entrée, chaque branche incluant deux interrupteurs connectés en série et une sortie connectée à un noeud de connexion entre les deux interrupteurs de la branche, chacune desdites sorties du premier onduleur étant au même potentiel qu'une desdites sorties du deuxième onduleur.

**Patentansprüche**

1. System zur Bereitstellung (4) einer Wechselstromlast (3) aus mehreren Gleichspannungsquellen (1, 2), umfassend:

     - einen ersten Pulsbreitenmodulierungswechselrichter (11), umfassend:

         - zwei Eingangsklemmen, die dazu bestimmt sind, an eine erste Gleichspannungsquelle angeschlossen zu werden;
         - zwei in Reihe geschaltete Schalter (111, 112) zwischen den zwei Eingangsklemmen des ersten Wechselrichters;
         - einen Ausgang, der an einen Anschlussknoten zwischen den Schaltern des ersten Wechselrichters angeschlossen ist;

     - einen zweiten Pulsbreitenmodulierungswechselrichter (21), umfassend:

         - zwei Eingangsklemmen, die dazu bestimmt sind, an eine zweite Gleichspannungsquelle angeschlossen zu werden,
         - in Reihe geschaltete Schalter (211, 212) zwischen den zwei Eingangsklemmen des zweiten Wechselrichters;
         - einen Ausgang, der an einen Anschlussknoten zwischen den Schaltern des zweiten Wechselrichters angeschlossen ist, wobei dieser Ausgang das gleiche Potential wie der Ausgang des ersten Wechselrichters aufweist;

     - einen Steuerkreis (7), der konfiguriert ist, um die Schalter des ersten und zweiten Pulsbreitenmodulierungswechselrichters (11, 12) derart zu steuern, dass der erste und der zweite Wechselrichter eine abwechselnde Speisung der Ausgänge während einer gleichen Halbschwingung der zu erzeugenden Wechselspannung an den Ausgängen durchführen;

wobei das Bereitstellungssystem **gekennzeichnet ist durch**

     - eine gemeinsame Eingangsklemme, die eine der Eingangsklemmen des zweiten Wechselrichters und eine der Eingangsklemmen des ersten Wechselrichters bildet, und durch

     - einen gemeinsamen Schalter (112), der einen der in Reihe geschalteten Schalter des ersten Wechselrichters und einen der in Reihe geschalteten Schalter des zweiten Wechselrichters bildet.

2. Bereitstellungssystem nach Anspruch 1, wobei die erste Gleichspannungsquelle einen Gleichspannungs-/Gleichspannungswandler und eine Spannungsquelle aufweist, die an den Eingang des Gleichspannungs-/Gleichspannungswandler angeschlossen ist, wobei der Ausgang des Gleichspannungs-/Gleichspannungswandlers an die zwei Eingangsklemmen des ersten Wechselrichters angeschlossen ist.

3. Bereitstellungssystem nach Anspruch 1, ferner umfassend eine erste Gleichspannungsquelle, die an die zwei Eingangsklemmen des ersten Wechselrichters angeschlossen ist, und eine zweite Gleichspannungsquelle, die an die zwei Eingangsklemmen des zweiten Wechselrichters angeschlossen ist, wobei die Nennspannung der ersten Gleichspannungsquelle größer als die Nennspannung der zweiten Gleichspannungsquelle ist.

4. Bereitstellungssystem nach Anspruch 3, wobei eine der Gleichspannungsquellen eine Brennstoffzelle ist und wobei die andere der Gleichspannungsquellen eine elektrochemische Akkumulatorbatterie ist.

5. Bereitstellungssystem nach einem der vorhergehenden Ansprüche, wobei die in Reihe geschalteten Schalter des ersten Wechselrichters spannungsunidirektional und strombidirektional sind.

6. Bereitstellungssystem nach Anspruch 5, wobei die in Reihe geschalteten Schalter des ersten Wechselrichters jeweils einen Leistungstransistor aufweisen, der parallel zu einer Freilaufdiode geschaltet ist.

7. Bereitstellungssystem nach Anspruch 5 oder 6, wobei mindestens einer der in Reihe geschalteten Schalter des zweiten Wechselrichters ein spannungsbidirektionaler und stromunidirektionaler Schalter ist.

**8.** Bereitstellungssystem nach Anspruch 7, wobei der spannungsbidirektionale und stromunidirektionale Schalter einen Leistungstransistor aufweist, der mit einer Diode in Reihe geschaltet ist.

**9.** Bereitstellungssystem nach Anspruch 5 oder 6, wobei mindestens einer der in Reihe geschalteten Schalter des zweiten Wechselrichters ein spannungsbidirektionaler und strombidirektionaler Schalter ist.

**10.** Bereitstellungssystem nach Anspruch 9, wobei der spannungsbidirektionale und strombidirektionale Schalter zwei Leistungstransistoren aufweist, die antiparallel in Reihe geschaltet sind, wobei jeder dieser zwei Transistoren eine Freilaufdiode aufweist, die parallel geschaltet ist.

**11.** Bereitstellungssystem nach einem der vorhergehenden Ansprüche, wobei der erste und der zweite Wechselrichter Dreiphasenwechselrichter sind, die jeweils drei Zweige aufweisen, die zwischen ihren Eingangsklemmen parallel geschaltet sind, wobei jeder Zweig zwei in Reihe geschaltete Schalter und einen Ausgang, der an einen Anschlussknoten zwischen den zwei Schaltern des Zweiges angeschlossen ist, aufweist, wobei jeder der Ausgänge des ersten Wechselrichters das gleiche Potential wie einer der Ausgänge des zweiten Wechselrichters aufweist.

**Claims**

**1.** System (4) for supplying power to an AC load (3) from a plurality of DC voltage sources (1, 2), comprising:

- a first pulse width modulation inverter (11) including:

- two input terminals intended to be connected to a first DC voltage source;
- two switches connected in series (111, 112) between the two input terminals of the first inverter;
- an output connected to a connection node between said switches of the first inverter;

- a second pulse width modulation inverter (21) including:

- two input terminals intended to be connected to a second DC voltage source;
- switches connected in series (211, 212) between the two input terminals of the second inverter;
- an output connected to a connection node between said switches of the second inverter, this output being at the same potential as the output of the first inverter;

- a control circuit (7) configured to control the switches of the first and second inverters (11, 12) in pulse width modulation mode, such that the first and second inverters alternately supply power to said outputs during one and the same half-cycle of the AC voltage to be generated on said outputs;

the power supply system being **characterized in that**

- a shared input terminal forms one of said input terminals of the second inverter and one of said input terminals of the first inverter and **in that**

- a shared switch (112) forms one of said switches connected in series of the first inverter and one of said switches connected in series of the second inverter.

**2.** Power supply system according to Claim 1, in which the first DC voltage source includes a DC-to-DC converter and a voltage source connected to the input of the DC-to-DC converter, the output of the DC-to-DC converter being connected to the two input terminals of the first inverter.

**3.** Power supply system according to Claim 1, additionally including a first DC voltage source connected to the two input terminals of the first inverter and a second DC voltage source connected to the two input terminals of the second inverter, the nominal voltage of the first DC voltage source being higher than the nominal voltage of the second DC voltage source.

**4.** Power supply system according to Claim 3, in which one of said DC voltage sources is a fuel cell and in which the other of said DC voltage sources is a battery of electrochemical accumulators.

**5.** Power supply system according to any one of the preceding claims, in which said switches connected in series of the first inverter are one-way voltage and two-way current switches.

**6.** Power supply system according to Claim 5, in which said switches connected in series of the first inverter each include a power transistor connected in parallel to a flyback diode.

**7.** Power supply system according to Claim 5 or 6, in which at least one of said switches connected in series of the second inverter is a two-way voltage and one-way current switch.

8. Power supply system according to Claim 7, in which said two-way voltage and one-way current switch includes a power transistor connected in series with a diode.

9. Power supply system according to Claim 5 or 6, in which at least one of said switches connected in series of the second inverter is a two-way voltage and two-way current switch.

10. Power supply system according to Claim 9, in which said two-way voltage and two-way current switch includes two power transistors connected back-to-back in series, each of these two transistors including a flyback diode connected in parallel.

11. Power supply system according to any one of the preceding claims, in which said first and second inverters are three-phase inverters, each comprising three branches connected in parallel between their input terminals, each branch including two switches connected in series and one output connected to a connection node between the two switches of the branch, each of said outputs of the first inverter being at the same potential as one of said outputs of the second inverter.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7199535 B
- US 2011133677 A